# EUROPÄISCHE PATENTSCHRIFT

(11) **EP 0 757 469 B1**
(45) Veröffentlichungstag und Bekanntmachung des Hinweises auf die Patenterteilung: **16.03.2005**
(21) Anmeldenummer: 96111335.4
(22) Anmeldetag: 13.07.1996
(51) Int. Cl.: H04M 11/10, H04Q 7/32

(54) **Diktiergerät mit drahtloser Datenübertragung**
Dictation apparatus with wireless data transmission
Appareil à dicter à transmission de données sans fil

(30) Priorität: 31.07.1995 DE 19528038
(43) Veröffentlichungstag der Anmeldung: 05.02.1997
(73) Patentinhaber: GBS Holding GmbH, 85598 Baldham bei München (DE)
(72) Erfinder: Schöffel, Peter, Grundig E.M.V., 90762 Fürth (DE)
(74) Vertreter: Pröll, Jürgen, Dipl.-Ing.

(56) Entgegenhaltungen:
- EP-A- 0 399 611
- EP-A- 0 642 286
- DE-A- 3 806 134
- DE-A- 4 141 382
- DE-A- 4 225 567

## Beschreibung

Die Erfindung betrifft ein Diktiergerät mit drahtloser Datenübertragung nach dem Oberbegriff des Anspruchs 9 und ein Verfahren zum Betrieb dieses Diktiergeräts nach dem Oberbegriff des Anspruchs 1.

Aus der EP 261 680 A2 ist ein zentrales Magnetband-Diktiergerät bekannt, das an eine Telefonleitung angeschlossen wird und von einem Telefon aus durch DTMF-Signale gesteuert wird. Hierbei werden vier Tasten des Telefons, durch die ein spezifisches DTMF-Signal ausgegeben wird, im zentralen Diktiergerät verschiedene Betriebsmodes zugeordnet. Um die DTMF-Signale im zentralen Diktiergerät in Steuersignale umwandeln zu können, weist dieses einen entsprechenden Konverter auf.

Dabei ist von Nachteil, daß für die Sprach-Übertragung eine Anschlußleitung an ein Telekommunikationsnetz vorhanden sein muß, über die die gewünschte Verbindung aufgebaut werden kann. Auch eine zeitversetzte Übertragung des Diktats ist nicht möglich. Weiterhin von Nachteil ist, daß keine beschleunigte Übertragung möglich ist.

Aus der DE 25 45 872 A1 ist eine Diktieranlage bekannt, die aus einer Zentralstelle und mehreren Außenstellen, welche die Zentralstelle über ein Telefonnetz anwählen können, besteht. Außenstellen und Zentralstelle weisen jeweils ein Aufzeichnungs- und Wiedergabegerät auf, bei dem der Aufzeichnungsträger mit normaler und erhöhter Geschwindigkeit gelesen und beschrieben werden kann. Wurde in einer Außenstelle ein Diktat mit normaler Geschwindigkeit aufgezeichnet, wird automatisch eine Verbindung zur Zentralstelle aufgebaut und das Diktat mit erhöhter Geschwindigkeit übertragen und in der Zentralstelle mit erhöhter Geschwindigkeit aufgezeichnet. Anschließend besteht die Möglichkeit das in der Zentralstelle aufgezeichnete Diktat mit normaler Geschwindigkeit wiederzugeben.

Dabei ist von Nachteil, daß für die Sprach-Übertragung eine Telefonleitung vorhanden sein muß, über die eine Verbindung zur Zentralstelle aufgebaut werden kann. Weiterhin liegt durch die Erhöhung der Geschwindigkeit des Aufzeichnungsträgers das Übertragungssignal in einem höheren Frequenzbereich als das Aufzeichnungssignal. Dadurch kann bei bandbegrenzten Übertragungskanälen, wie bei einer Übertragung über Telefonleitungen, ein Informationsverlust auftreten.

Aus der DE 37 33 415 A1 ist ein Kombinationsgerät bekannt, das aus einem Telefonhörer mit Wähleinheit und einer Diktiereinheit besteht, deren Magnetbandlaufwerk in den Telefonhörer eingebaut ist. Dabei wird der Lautsprecher und das Mikrofon des Telefonhörers auch für die Diktiereinheit benutzt. Weiterhin ist eine Schalteinheit zur Umschaltung zwischen Telefon und Diktierbetrieb vorgesehen.

Dabei ist von Nachteil, daß eine zeitversetzte Sprach-Übertragung vom Diktiergerät über das Telefonnetz unter Nutzung des Telefons nicht möglich ist. Auch eine beschleunigte Übertragung eines Diktats ist nicht vorgesehen.

Aus der DE 41 41 382 A1 ist ein drahtloses Komforttelefon bekannt, das neben dem Telefon auch einen Speicher für Sprache aufweist. Dadurch kann das Komforttelefon als Diktiergerät und Anrufbeantworter benutzt werden. Weiterhin ermöglicht eine Datenübertragungsfunktion zu einer mit dem Telefon angewählten Teilnehmereinrichtung, daß die gespeicherten Daten mit einer höheren Datenrate als bei der Speicherung übertragen werden.

Dabei ist von Nachteil, daß für eine Datenübertragung vom Benutzer zunächst eine andere, schnurgebundene Teilnehmereinrichtung angewählt werden muß, zu der die Daten übertragen werden.

Aus der DE 38 06 134 A1 ist ein Diktiergerät mit einer abgesetzten Sprechund Steuereinrichtung bekannt, das mit einem Telefon gekoppelt oder kombiniert ist, wobei der Handapparat des Telefons mit seiner Sprech- und Höreinrichtung die Funktion der abgesetzten Sprech- und Höreinrichtung des Diktiergeräts übernimmt. Hierfür sind auf dem Handapparat des Telefons Steuertasten zur Bedienung des Diktiergeräts angeordnet. Zusätzlich kann ein Anrufbeantworter über die abgesetzte Sprech- und Steuereinrichtung gesteuert werden.

Dabei ist von Nachteil, daß eine Sprach-Übertragung vom Diktiergerät über das Telefonnetz zu einer anderen Teilnehmereinrichtung nicht vorgesehen ist.

Aus EP 0 642 286 A1ist ein mobiles Kommunikationsgerät bekannt. Dieses Kommunikationsgerät weist eine Aufzeichnungs- und Wiedergabefunktion auf.

Aus DE 42 25 567 A1 ist eine Vorrichtung und ein Verfahren zum automatischen Anrufen und Übertragen gespeicherter Information offenbart. Bei der Information handelt es sich vorzugsweise um gesprochene Informationen.

Es ist daher die Aufgabe der vorliegenden Erfindung, ein Diktiergerät derart auszugestalten, daß eine Übertragung von Diktaten sowohl automatisch als auch vom Benutzer gesteuert drahtlos mit maximaler Übertragungsgeschwindigkeit und zeitversetzt ermöglicht wird.

Diese Aufgabe wird durch ein Verfahren nach Anspruch 1 und ein Diktiergerät nach Anspruch 9 gelöst.

Dabei ist von Vorteil, daß durch die Verwendung von Sende- und Empfangsbaugruppen eines bereits vorhandenen Mobilfunknetzes eine gut ausgebaute nachrichtentechnische Infrastruktur mitbenutzt wird, die nahezu weltweit zur Verfügung steht. Dadurch können eilige Diktate innerhalb kürzester Zeit nahezu weltweit übertragen werden. Durch die Zeitsteuerung des Übertragungsvorgangs kann die Übertragung zu einer Zeit erfolgen, in der ein besonders niedriger Übertragungstarif gilt. Eine Interaktion des Benutzers ist nicht erforderlich. Durch eine benutzergesteuerte Übertragung kann alternativ auch eine sofortige Übertragung erreicht werden oder es kann vom Schreibbüro aus ein Diktat angefordert werden.

Vorteilhafte Ausgestaltungen sind den abhängigen Ansprüchen zu entnehmen.

Die Erfindung wird im folgenden anhand der in der Zeichnung dargestellten Ausführungsform näher erläutert und beschrieben. Die Figur zeigt ein erfindungsgemäß ausgestaltetes Diktiergerät.

Gegenwärtig ist es beispielsweise auf Dienstreisen erforderlich zum Speichern von Diktaten und zum mobilen Telefonieren zwei Geräte mit sich zu führen. Dennoch ist es mit diesen beiden Geräten nicht möglich, daß Diktate automatisch, beispielsweise zu Zeiten günstiger Tarife, an eine Gegenstelle in einem Schreibbüro übertragen werden. Dadurch ergibt sich insbesondere bei längeren Reisen eine erhebliche Zeitverzögerung bei Diktaten.

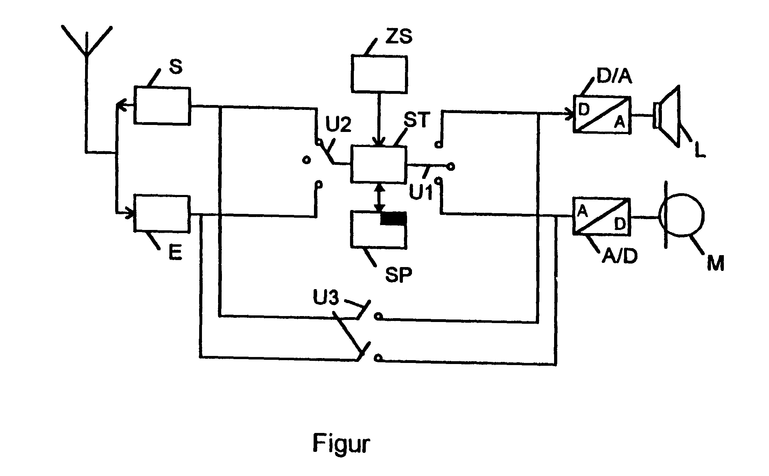

Fig. 1 zeigt das erfindungsgemäße Diktiergerät, welches zusätzliche Baugruppen eines Funktelefons und zur Steuerung aufweist. Im einzelnen weist das Diktiergerät ein Mikrofon M zur elektro/akustischen Wandlung der Sprache, einen Analog/Digital-Wandler A/D zur Digitalisierung des Mikrofonsignals, einen Umschalter U1 mit einer Aufnahme-, Wiedergabeund Ausstellung, einen Speicher SP für das digitale Sprachsignal, eine Steuereinheit ST, eine Zeitsteuereinheit ZS, einen Umschalter U2 mit einer Sende-, Empfangs- und Ausstellung, einen Umschalter U3 mit einer Telefonstellung und einer Ausstellung sowie Sende- S und Empfangsbaugruppen E eines Funktelefons auf, die mit einer Antenne verbunden sind.

Bei der Aufnahme eines Diktats wird das durch das Mikrofon M aufgenommene Sprachsignal im Analog/Digitalwandler A/D in ein digitales Sprachsignal gewandelt und anschließend über den Umschalter U1, der in Aufnahmestellung den Analog/Digital-Wandler A/D mit dem Speicher SP verbindet, zum Speicher SP geleitet und dort gespeichert.

Zusätzlich besteht die Möglichkeit, das digitale Sprachsignal über die Steuereinheit ST zu leiten, welche einen Algorithmus zur Datenreduktion auf das Ausgangssignal des Analog/Digital-Wandlers A/D anwendet, wodurch dessen Datenrate verringert wird. Der Umschalter U2 befindet sich während einer Aufnahme in der Ausstellung und verbindet weder Sender S noch Empfänger E mit dem Speicher SP.

Während oder nach dem Diktat kann Umschalter U1 benutzergesteuert auf Wiedergabe umgeschaltet werden. Dann wird der Speicher SP mit dem Digital/Analog-Wandler D/A und Lautsprecher L verbunden und der Speicher SP wird ausgelesen. Falls eine Datenreduktion bei der Aufnahme durchgeführt wurde, wird das Ausgangssignal des Speichers SP über die Steuereinheit ST und den Umschalter U1 zum Digital/Analog-Wandler D/A geleitet und durch den Lautsprecher L ausgegeben. In der Steuereinheit ST wird dabei ein zum Komprimierungsalgorithmus inverser Algorithmus auf das digitale Sprachsignal angewendet, wodurch es dekomprimiert wird.

Nachdem das Diktat vollständig ist, wird es vom Benutzer als abgeschlossen gekennzeichnet. Diese Kennzeichnung wird mit dem Diktat abgespeichert.

Das Diktiergerät weist verschiedene Betriebsarten auf, die vom Benutzer eingestellt werden können. In einer Betriebsart wird versucht, sobald ein abgeschlossenes Diktat gespeichert ist, dieses Diktat an ein baugleiches Diktiergerät zu übertragen. Hierfür wird im Speicher SP eine Rufnummer gespeichert, welche die Steuereinheit benutzt, um mittels der Baugruppen des Funktelefons eine Verbindung aufzubauen. Diese Rufnummer wird vom Benutzer eingespeichert und ist für alle gespeicherten Diktate relevant. Für den Benutzer wird eine Meldung erzeugt, welche auf die für die Datenübertragung benutzte Rufnummer hinweist. Während der Datenübertragung befindet sich Umschalter U1 in der Ausstellung und U2 verbindet den Speicher SP mit dem Sender S. Die Sprachdaten werden aus dem Speicher SP ausgelesen, über Umschalter U2 an den Sender weitergeleitet und über die Antenne ausgesendet.

Für den Benutzer besteht jedoch die Möglichkeit die Datenübertragung zu unterbrechen, was besonders bei langen Diktaten von Nutzen ist. Dann wird ein spezielles Unterbrechungssignal gesendet, damit das empfangende Diktiergerät erkennen kann, daß die Datenübertragung später an dieser Stelle fortgesetzt werden soll. Anschließend wird eine Kennung des sendenden Diktiergeräts übertragen, damit das empfangende Diktiergerät im Schreibbüro erkennen kann, welches Diktat später von welchem Diktiergerät fortgesetzt werden soll. Außerdem wird noch im Speicher SP des sendenden Diktiergeräts an der Stelle, an der die Unterbrechung erfolgt ist, ein Unterbrechungssignal gespeichert und der bereits übertragene Teil des Diktats gelöscht. Danach ist die Datenübertragung unterbrochen und der Benutzer kann eine andere Funktion des Diktiergeräts nutzen. Sobald diese Nutzung beendet ist, setzt das Diktiergerät automatisch die Übertragung fort, indem es im Speicher SP nach dem Unterbrechungssignal sucht, erneut eine Verbindung mit der diesem Diktat zugeordneten Rufnummer aufbaut, seine Kennung überträgt und an dieser Stelle mit der Datenübertragung fortfährt. Das empfangende Diktiergerät, zu dem die Verbindung aufgebaut wurde, sucht nach gespeicherten Kennungen und erkennt bei einer Übereinstimmung zwischen gespeicherter und empfangener Kennung das Diktat, welches fortgesetzt werden soll.

Alternativ kann mit jedem Diktat eine individuelle Rufnummer gespeichert werden, welche, sofern eine gespeichert wurde, der für alle anderen Diktate abgespeicherten Rufnummer vorgezogen wird. Falls keine Rufnummer gespeichert ist, gibt das Diktiergerät ein Warnsignal an den Benutzer aus.

Sollte eine Rufnummer gespeichert sein, unter der keine Verbindung mit einem anderen Diktiergerät aufgebaut werden kann, wird eine Fehlermeldung ausgegeben. Ein baugleiches Diktiergerät wird daran erkannt, daß eine gegenseitige Synchronisierung vor der Datenübertragung möglich ist.

In einer weiteren Betriebsart kann der Benutzer einen Übertragungsbeginn für die Baugruppe zur Zeitsteuerung ZS abspeichern, ab dem die Übertragung beginnen soll. Zusammen mit dem Übertragungsbeginn muß der Benutzer auch eine Kennung des Diktats eingeben, welches übertragen werden soll. Wird kein Diktat spezifiziert, so werden nacheinander alle gespeicherten Diktate übertragen. Zusätzlich besteht die Möglichkeit jedem Diktat eine Übertragungspriorität zuzuordnen, wodurch die Übertragungsreihenfolge festgelegt wird. Dies kann durch die Reihenfolge der Eingabe der Kennungen erfolgen.

Zusätzlich besteht die Möglichkeit in einer der oben beschriebenen Betriebsarten von einem Schreibbüro aus zu einem Diktiergerät mittels der Rufnummer des integrierten Funktelefons eine Verbindung aufzubauen und die Übertragung mindestens eines als abgeschlossen gekennzeichneten Diktats anzufordern. Die Steuereinheit ST nimmt dabei den ankommenden Ruf an, indem sie Schleifenschluß durchführt. Anschließend erkennt sie an einem vom anrufenden Diktiergerät übertragenen Steuersignal, daß Diktate abgerufen werden sollen. Falls abgeschlossene Diktate vorliegen, überprüft die Steuereinheit noch, ob das abrufende Diktiergerät aufgrund seiner übertragenen Kennung berechtigt ist Diktate abzurufen. Hierfür werden vom Benutzer im Diktiergerät die Kennungen der Diktiergeräte gespeichert, die berechtigt sind Diktate abzurufen. Falls das Diktiergerät berechtigt ist, werden die als abgeschlossen gekennzeichneten Diktate übertragen.

Um bei niedriger Übertragungsqualität zwischen den beiden Diktiergeräten dennoch eine fehlerfreie Datenübertragung zu erreichen, werden in einer Ausführungsform die aus dem Speicher SP ausgelesenen Sprachdaten der Steuereinheit ST zugeleitet und dort kanalcodiert, bevor sie vom Sender S übertragen werden. Dadurch können Übertragungsfehler im empfangenden Diktiergerät berichtigt werden. Weiterhin kann die Datenrate bei der Übertragung in Abhängigkeit von der Übertragungsqualität von der Steuereinheit ST automatisch eingestellt werden.

Da es sich bei der Übertragung eines Diktats im wesentlichen um eine unidirektionale Übertragung handelt, werden sowohl Hin- als auch Rückübertragungskanal der Übertragungsstrecke für die Übertragung benutzt. Dadurch kann die Übertragungszeit wesentlich reduziert werden.

In einer weiteren Betriebsart kann die Datenübertragung ganz abgeschaltet werden. Umschalter U2 befindet sich dann in der Ausstellung, in der weder Sender S noch Empfänger E mit dem Speicher SP verbunden sind. Dies kann bei nahezu leerem Energiespeicher oder falls das Funktelefon Störungen verursacht, beispielsweise in einem Flugzeug, erforderlich sein.

Das Diktiergerät weist auch eine Betriebsart auf, in der es wie ein Funktelefon arbeitet. Es erfolgt dann keine Speicherung der Sprache und der Benutzer kann unmittelbar eine Rufnummer wählen und ein Gespräch führen. Hierfür werden Analog/Digital-Wandler A/D und Digital/Analog-Wandler D/A unmittelbar durch den Umschalter U3 mit Sender S und Empfänger E verbunden. Die Schalter U1 und U2 befinden sich in ihrer Ausstellung. Der Speicher SP wird somit weder ausgelesen noch wird etwas darin abgespeichert.

Eine weitere Betriebsart ermöglicht es den Speicher SP als Speicher für ankommende Rufe zu benutzen, so daß eine Anrufbeantworterfunktion realisiert wird. Hierfür muß die Steuereinheit ST derart ausgebildet sein, daß sie einen ankommenden Ruf erkennt, Schleifenschluß durchführt, einen im Speicher SP gespeicherten Ansagetext an den Anrufer ausgibt und gegebenenfalls eine ankommende Sprachnachricht im Speicher SP abspeichert. Für die Ausgabe des Ansagetextes verbindet dabei Umschalter U2 den Speicher SP mit dem Sender S, zur Speicherung einer Sprachnachricht verbindet Umschalter U2 den Speicher SP mit dem Empfänger E. Zum Mithören des ankommenden Rufs besteht die Möglichkeit über Umschalter U1 den Speicher SP mit dem Digital/Analog-Wandler D/A und dem Lautsprecher L zu verbinden.

Die einzelnen Betriebsarten werden vom Benutzer über Eingabemittel eingegeben und veranlassen die Steuereinheit ST die Umschalter U1, U2 und U3 entsprechend zu stellen, die Adressen für den Speicher SP zu erzeugen sowie die Stromversorgung für verschiedene Baugruppen, insbesondere für Sender S und Empfänger E des Funktelefons, ein- und auszuschalten. Weiterhin gibt die Steuereinheit ST Meldungen aus, die den Betriebszustand des Diktiergeräts kennzeichnen.

## Patentansprüche

1. Verfahren zum Betrieb eines Diktiergerätes mit drahtloser Datenübertragung, wobei
- zeit- oder benutzergesteuert eine Kommunikationsverbindung zu einer gespeicherten Rufnummer über ein digitales Mobilfunknetz aufgebaut wird,
- Steuerdaten zur Synchronisation und Steuerung des angerufenen Diktiergerätes übertragen werden und mindestens ein als abgeschlossen gekennzeichnetes Diktat aus einem Speicher (SP) über die Kommunikationsverbindung übertragen wird,
- beide Übertragungskanäle der Kommunikationsverbindung im digitalen Mobilfunknetz zur Übertragung benutzt werden,
**dadurch gekennzeichnet, dass**
- bei einer Unterbrechung einer Übertragung ein Unterbrechungssignal und die Kennzeichnung des sendenden Diktiergerätes übertragen wird,
- im sendenden Diktiergerät an der Stelle der Unterbrechung das Unterbrechungssignal und im empfangenden Diktiergerät am Ende der bisher gespeicherten Daten die empfangene Kennzeichnung gespeichert wird,
- nach der Unterbrechung des Diktats erneut eine Verbindung zwischen beiden Diktiergeräten aufgebaut wird,
- die Kennzeichnung des sendenden Diktiergerätes übertragen wird und an der Stelle des Unterbrechungssignals die Datenübertragung fortgesetzt wird und
- das empfangende Diktiergerät in seinem Speicher nach der empfangenen Kennzeichnung sucht und dort mit der Speicherung fortfährt.

2. Verfahren nach Anspruch 1,
**dadurch gekennzeichnet, dass**
die Sprachdaten vor der Übertragung über die Kommunikationsverbindung komprimiert werden.

3. Verfahren nach einem der Ansprüche 1 oder 2,
**dadurch gekennzeichnet, dass**
bei der Übertragung eines Diktats die Übertragungsdaten durch eine Kanalcodierung geschützt werden.

4. Verfahren nach einem der Ansprüche 1 bis 3,
**dadurch gekennzeichnet, dass**
bei der Übertragung eines Diktats das empfangende Diktiergerät hinsichtlich seiner Berechtigung überprüft wird.

5. Verfahren nach einem der Ansprüche 1 bis 4,
**dadurch gekennzeichnet, dass**
die Stromversorgung für nicht genutzte Baugruppen von einer Steuereinheit (ST) abgeschaltet wird.

6. Verfahren nach einem der Ansprüche 1 bis 5,
**dadurch gekennzeichnet, dass**
das Diktiergerät als Anrufbeantworter genutzt wird.

7. Verfahren nach einem der Ansprüche 1 bis 6,
**dadurch gekennzeichnet, dass**
vom empfangenden Diktiergerät das sendende Diktiergerät kontaktiert wird und vom empfangenden Diktiergerät die Übertragung des Diktats angefordert wird.

8. Verfahren nach einem der Ansprüche 1 bis 7,
**dadurch gekennzeichnet, dass**
in einer ersten Betriebsart ein abgeschlossenes Diktat gespeichert und sofortig übertragen wird und im Speicher (SP) hierzu eine zugehörige Rufnummer abgespeichert ist.

9. Diktiergerät mit drahtloser Datenübertragung, welches eine Lautsprecher-/Mikrofonbaugruppe (L, M), einen Analog-/Digital-Wandler (A/D), einen Digital-/Analog-Wandler (DIA), einen digitalen Speicher (SP) für Sprachund Steuerdaten, eine Steuereinheit (ST), Sende- und Empfangsbaugruppen (S, E) eines digitalen Funktelefons, sowie eine Zeitsteuereinheit (ZS) aufweist,
**dadurch gekennzeichnet, dass**
das Diktiergerät, sowohl als empfangendes Gerät als auch als sendendes Gerät, ausgebildet ist zur Durchführung des Verfahrens nach Anspruch 1 und das Diktiergerät weiterhin Baugruppen zur Datenreduktion und zur Kanalcodierung der Sprachdaten und einen Detektor zur Ermittlung abgeschlossener Diktate aufweist, wobei der Detektor ein Signal detektiert, welches mit dem Diktat abgespeichert ist.

10. Diktiergerät nach Anspruch 9,
**dadurch gekennzeichnet, dass**
das Diktiergerät Umschalter (U1, U2, U3) aufweist, mittels derer die Steuereinheit (ST) die verschiedenen Baugruppen zusammenschaltet.

11. Diktiergerät nach einem der Ansprüche 9 oder 10,
**dadurch gekennzeichnet, dass**
die Lautsprecher-Mikrofonbaugruppe (L, M) als Handapparat eines Telefons ausgebildet ist und eine Wähleinrichtung sowie Schaltmittel zur Steuerung des Diktiergerätes und der Telefonbaugruppen aufweist.

12. Diktiergerät nach einem der Ansprüche 9 bis 11,
**dadurch gekennzeichnet, dass**
das Diktiergerät aus dem Speicher (SP) ausgelesene Sprachdaten der Steuereinheit (ST) zuleitet und kanalcodiert und über die Sendebaugruppe (S) an ein zweites Diktiergerät überträgt.

## Claims

1. Method for operating a dictating machine with wireless data transmission, in which
- a communications connection to a stored call number is established in a time-controlled or user-controlled manner via a digital mobile phone network,
- control data for the synchronisation and control of the called dictating machine are transmitted and at least one dictation identified as completed is transmitted from a memory (SP) via the communications connection,
- both transmission channels of the communications connection in the digital mobile telephone network are used for the transmission, **characterised in that**
- with an interruption of a transmission an interruption signal and the identification of the transmitting dictating machine are transmitted,
- in the transmitting dictating machine the interruption signal is stored at the site of the interruption and in the receiving dictating machine the received identification is stored at the end of the hitherto stored data,
- after the interruption of the dictation a connection is re-established between both dictating machines,
- the identification of the transmitting dictating machine is transmitted and the data transmission is continued at the site of the interruption signal, and
- the receiving dictating machine searches its memory for the received identification and continues with the storage in the memory.

2. Method according to claim 1, **characterised in that** the speech data are compressed before being transmitted via the communications connection.

3. Method according to one of claims 1 or 2, **characterised in that** in the transmission of a dictation the transmission data are protected by a channel coding.

4. Method according to one of claims 1 to 3, **characterised in that** in the transmission of a dictation the receiving dictating machine is checked as regards its authorisation.

5. Method according to one of claims 1 to 4, **characterised in that** the power supply for unused assemblies is switched off from a control unit (ST).

6. Method according to one of claims 1 to 5, **characterised in that** the dictating machine is used as a call answering device.

7. Method according to one of claims 1 to 6, **characterised in that** the transmitting dictating machine is contacted by the receiving dictating machine and the transmission of the dictation is requested by the receiving dictating machine.

8. Method according to one of claims 1 to 7, **characterised in that** in a first operating mode a completed dictation is stored and is immediately transmitted, and an associated call number for this is stored in the memory (SP).

9. Dictating machine with wireless data transmission, comprising a loudspeaker/microphone assembly (L, M), an analogue/digital converter (A/D), a digital/analogue converter (D/A), a digital memory (SP) for speech and control data, a control unit (ST), transmitting and receiving assemblies (S, E) of a digital mobile telephone, as well as a time control unit (ZS), **characterised in that** the dictating machine is designed both as a receiving device and as a transmitting device for carrying out the method according to claim 1, and the dictating machine furthermore comprises assemblies for data reduction and for channel coding of the speech data and a detector for determining completed dictations, in which the detector detects a signal with which the dictation is stored.

10. Dictating machine according to claim 9, **characterised in that** the dictating machine comprises changeover switches (U1, U2, U3), by means of which the control unit (ST) interconnects the various assemblies.

11. Dictating machine according to one of claims 9 or 10, **characterised in that** the loudspeaker/microphone assembly (L, M) is designed as a handset of a telephone and comprises a selection/dialling device as well as switching means for controlling the dictating machine and the telephone assemblies.

12. Dictating machine according to one of claims 9 to 11, **characterised in that** the dictating machine passes and channel codes speech data read from the memory (SP) to the control unit (ST) and transmits these data via the transmitting assembly (S) to a second dictating machine.

## Revendications

1. Procédé pour faire fonctionner un appareil à dicter avec transmission de données sans fil, selon lequel
- une liaison de communication est établie d'une manière commandée dans le temps ou par un utilisateur, avec un numéro d'appel mémorisé par l'intermédiaire d'un réseau radio mobile numérique,
- des données de commande sont transmises pour la synchronisation et la commande de l'appareil à dicter appelé et au moins une dictée caractérisée comme terminée est transmise à partir d'une mémoire (SP) par l'intermédiaire de la liaison de communication,
- les deux canaux de transmission de la liaison de communication sont utilisés dans le réseau radio mobile numérique pour la transmission,
**caractérisé en ce que**
- lors de l'interruption d'une transmission, un signal d'interruption et la caractérisation de l'appareil à dicter qui émet sont transmis,
- la caractérisation reçue est mémorisée dans l'appareil à dicter qui émet, à l'endroit de l'interruption du signal d'interruption et, dans l'appareil à dicter qui reçoit, à la fin des données mémorisées jusqu'alors,
- après l'interruption de la dictée, une liaison est à nouveau établie entre les deux appareils à dicter,
- la caractérisation de l'appareil à dicter qui émet est transmise et la transmission de données est poursuivie à la place du signal d'interruption, et
- l'appareil à dicter, qui reçoit, recherche dans sa mémoire la caractérisation reçue et continue la mémorisation à cet endroit.

2. Procédé selon la revendication 1, **caractérisé en ce que** les données vocales sont comprimées avant la transmission par l'intermédiaire de la liaison de communication.

3. Procédé selon l'une des revendications 1 ou 2, **caractérisé en ce que** lors de la transmission d'une dictée, les données de transmission sont protégées par un codage de canal.

4. Procédé selon l'une des revendications 1 à 3, **caractérisé en ce que** lors de la transmission d'une dictée, l'autorisation de l'appareil à dicter qui reçoit est contrôlée.

5. Procédé selon l'une des revendications 1 à 4, **caractérisé en ce que** l'alimentation en courant est débranchée pour des modules non utilisés par une unité de commande (ST).

6. Procédé selon l'une des revendications 1 à 5, **caractérisé en ce que** l'appareil à dicter est utilisé en tant que répondeur.

7. Procédé selon l'une des revendications 1 à 6, **caractérisé en ce que** l'appareil à dicter qui émet est contacté par l'appareil à dicter qui reçoit et la transmission de la dictée est demandée par l'appareil à dicter qui reçoit.

8. Procédé selon l'une des revendications 1 à 7, **caractérisé en ce que** dans un premier type de fonctionnement, une dictée terminée est mémorisée et est transmise immédiatement et un numéro d'appel associé est mémorisé à cet effet dans la mémoire (SP).

9. Appareil à dicter avec transmission de données sans fil, qui comporte un module de haut-parleur / microphone (L, M), un convertisseur analogique / numérique (A/D), un convertisseur numérique / analogique (D/A), une mémoire numérique (SP) pour des données vocales et des données de commande, une unité de commande (ST), des modules d'émission et de réception (S, E) d'un radiotéléphone numérique, ainsi qu'une unité de commande temporelle (ZS), **caractérisé en ce que**
l'appareil à dicter est agencé, aussi bien en tant qu'appareil qui reçoit qu'appareil qui émet, pour l'exécution du procédé selon la revendication 1 et l'appareil à dicter comporte en outre des modules pour la réduction de données et pour le codage de canal des données vocales, et un détecteur pour déterminer des dictées terminées, le détecteur détectant un signal qui est mémorisé avec la dictée.

10. Appareil à dicter selon la revendication 9, **caractérisé en ce que** l'appareil à dicter comprend des commutateurs (U1, U2, U3), à l'aide desquels l'unité de commande (ST) connecte entre eux les différents modules.

11. Appareil à dicter selon l'une des revendications 9 ou 10, **caractérisé en ce que** le module de haut-parleur / microphone (L, M) est agencé sous la forme du combiné d'un téléphone et comporte un dispositif de sélection ainsi que des moyens de commutation pour commander l'appareil à dicter et les modules du téléphone.

12. Appareil à dicter selon l'une des revendications 9 à 11, **caractérisé en ce que** l'appareil à dicter envoie des données vocales, lues dans la mémoire (SP), à une unité de commande (ST) et leur applique un codage de canal et les transmet par l'intermédiaire du module d'émission (S) à un second appareil à dicter.
